Europäisches Patentamt

European Patent Office

Office européen des brevets

(11) Veröffentlichungsnummer: **0 171 774**
**B1**

# EUROPÄISCHE PATENTSCHRIFT

(45) Veröffentlichungstag der Patentschrift:
29.11.89

(51) Int. Cl.⁴: **G 21 F 5/00**

(21) Anmeldenummer: 85110054.5

(22) Anmeldetag: 09.08.85

(54) Verfahren zum Beladen von Behältern mit Brennstäben und Anlage zur Durchführung des Verfahrens sowie ein Behälter zur Aufnahme von Brennstäben.

(30) Priorität: 17.08.84 DE 3430244

(43) Veröffentlichungstag der Anmeldung:
19.02.86 Patentblatt 86/8

(45) Bekanntmachung des Hinweises auf die Patenterteilung:
29.11.89 Patentblatt 89/48

(84) Benannte Vertragsstaaten:
BE CH DE FR GB LI SE

(56) Entgegenhaltungen:
DE-A- 3 301 814
FR-A- 1 373 743
US-A- 2 853 625
US-A- 3 028 497

(73) Patentinhaber: **Deutsche Gesellschaft für Wiederaufarbeitung von Kernbrennstoffen mbH, Hamburger Allee 4 Postfach 1407, D-3000 Hannover 1 (DE)**

(72) Erfinder: **Lahr, Helfrid, Dr., Röntgenstrasse 8, D-7528 Karlsdorf (DE)**
Erfinder: **Pontani, Bernd, Goldbergstrasse 6, D-8755 Alzenau (DE)**

ACTORUM AG

## Beschreibung

Die Erfindung betrifft eine Anlage zum trockenen Beladen von Behältern mit Brennstäben oder Brennstababschnitten von bestrahlten Kernreaktorbrennelementen, in der die Brennstäbe oder Brennstababschnitte in horizontaler Ebene in einen horizontal angeordneten Behälter stirnseitig möglichst hoch an der inneren Ausnehmung eingeschoben werden.

Es ist vorgeschlagen worden, die direkte Endlagerung von Brennelementen so vorzunehmen, dass die Brennelemente zerlegt und ihre einzelnen Brennstäbe in nun möglicher dichterer Pakkung in Endlagerbehälter eingebracht werden. Diese dichte Packung der Brennstäbe hat den Vorteil, dass eine grössere Anzahl von Brennelementen in einem Endlagerbehälter Platz finden.

Es ist weiter vorgeschlagen worden, die vereinzelten Brennstäbe in Abschnitte zu zerschneiden, die dann in die vorgesehenen Behälter gefüllt werden. Es können so kleinere Lagergebindegrössen für die driekte Endlagerung erzielt werden. Gegenüber den Endlagerbehältern, die mit unzerschnittenen Brennstäben gefüllt sind, hätte dies für die Endlagerung den Vorteil, dass der bergmännische Endlagerbetrieb Endlagerbehälter mit kleineren Längenabmessungen und niedrigeren Gewichten hantieren kann.

Weiter ist bei dieser Verfahrensweise die Möglichkeit gegeben, Lagergebindegrössen zu erzielen, die in ihren Abmessungen den sogenannten Endlagerkokillen des HAW-Glases entsprechen. Für den bergmännischen Betrieb hätte dies die vorteilhafte Folge, dass nur eine Lagergebindegrösse für HAW-Abfall hantiert werden muss.

Beim Vereinzeln oder Zerschneiden von Brennstäben und beim Beladen der Behälter entsteht das Problem, dass die Behälter aussen von der radioaktiven Zellenatmosphäre kontaminiert werden können. Weiter ist ein möglichst dichtes Pakken der Brennstäbe oder der Brennstababschnitte wünschenswert, um den Lagerraum optimal auszunutzen.

Aus der US-A 2 853 625 ist eine Anlage zum Entladen von Brennstäben aus einem Kernreaktor und sofort darauffolgendem nassen Beladen dieser Brennstäbe in ein mit Wasser gefülltes Behältnis bekannt. Bei dieser Anlage werden die Brennstäbe in horizontaler Ebene in ein horizontal angeordnetes Behältnis stirnseitig möglichst hoch an der inneren Ausnehmung eingeschoben. Die Brennstäbe fallen dabei nach dem Einschieben in das Behältnis auf den Grund bzw. auf den bereits vorhandenen Stapel der Brennstäbe.

Der Erfindung liegt die Aufgabe zugrunde, eine Anlage der eingangs beschriebenen Art zu schaffen, mit der ein sicheres, sauberes und dichtes Beladen von Behältern möglich wird.

Die Aufgabe wird erfindungsgemäss durch die im Kennzeichen des Anspruchs 1 genannten Merkmale gelöst.

Die Brennstäbe oder die abgelängten Brennstababschnitte werden in horizontaler Lage stirnseitig in den Behälter eingeschoben. Da dieses oben am Innenumfang geschieht, kann der Behälter mit den Brennstäben oder den Brennstababschnitten optimal befüllt werden.

Die Brennstäbe oder geschnittenen Brennstababschnitte werden über die Beladerinne in den Behälter eingeschoben. Die Beladerinne wird gedreht, so dass ihre Öffnung nach unten zeigt. Die Brennstäbe oder Brennstababschnitte fallen nach unten auf den Behältermantel bzw. den bereits vorhandenen Stapel der vorher eingebrachten Brennstababschnitte. Es ist dabei sinnvoll, die Führungsrinne möglichst hoch am inneren Umfang des horizontal liegenden Behälters anzuordnen.

Eine vorteilhafte Ausgestaltung der Erfindung wird in den Merkmalen des Anspruchs 2 gekennzeichnet. Das Füllrohr verbindet die Vereinzelungsvorrichtung oder Brennstabschere und den Innenraum des zu beladenden Behälters lüftungstechnisch, so dass Stäube und Aerosole, die beim Vereinzeln oder Schneiden der Brennstäbe entstehen, in den an Unterdruck angelegten Behälter hineingezogen werden. Die Zellenatmosphäre wird daher äusserst wenig mit Aerosolen und Spaltstofffragmenten belastet.

In vorteilhafter Weise wird gemäss Anspruch 3 das Vereinzeln oder das Schneiden der Brennstäbe und die Beladung des Behälters in getrennten Arbeitsräumen vorgenommen. Die Kontaminationsgefahr für die Behälteroberfläche wird dadurch weiter verringert. Durch die verschliessbaren Durchgangsöffnungen ist ein Beladen eines Behälters möglich, wenn die Beladeöffnung des Behälters mit der entsprechenden Durchgangsöffnung in der Lüftungstrennwand fluchtet.

In den Unteransprüchen 4 bis 7 werden vorteilhafte Ausgestaltungen der Kupplungsstelle zwischen der Beladeöffnung des Behälters und der entsprechenden Öffnung in der Lüftungstrennwand gekennzeichnet.

Eine weitere vorteilhafte Ausgestaltung der erfindungsgemässen Anlage wird im Kennzeichen des Anspruchs 8 angegeben. Die Anordnung des achsparallelen Filters im Behälter ermöglicht einen gereinigten Luftaustritt aus dem Behälter während der Beladung. Die Aerosol- und Spaltstoffteilchen verbleiben in dem Behälter zusammen mit dem sie zurückhaltenden Filter.

Im Anspruch 9 wird eine vorteilhafte Kupplungsausbildung zwischen der Luftaustrittsöffnung des Behälters und der entsprechenden Öffnung in der Lüftungstrennwand gekennzeichnet.

Durch die Ausbildung, die im Kennzeichen des Anspruchs 10 offenbart wird, wird das Vereinzeln oder Schneiden sowie Zuführen und Beladen unter einer Schutzgasatmosphäre durchgeführt. Die dadurch erzielte sauerstoffarme Atmosphäre verhindert Selbstentzündungen der entstehenden Stäube.

Durch die Massnahmen des Anspruchs 11 kann der beladene Behälter mit einem Prüfgas beaufschlagt werden, so dass in folgenden Hantierungsschritten eine Leckkontrolle des beladenen Behälters erfolgen kann.

Die Erfindung betrifft auch einen Behälter zum Beladen mit Brennstäben oder Brennstababschnitten mit einer Anlage nach den Ansprüchen 1 bis 11. Dieser Behälter wird in den Ansprüchen 12 und 13 gekennzeichnet. Gemäss den Ansprüchen 12 und 13 wird der zu beladende Behälter mit zwei Bohrungen kleinen Durchmessers in seiner Stirnwand angeliefert, wobei die Bohrungen verschlossen sind. Die beiden Bohrungen bilden eine Beladeöffnung und eine Luftaustrittsöffnung. Über die Beladeöffnung werden die Brennstäbe oder Brennstababschnitte eingeführt. Über die Luftaustrittsöffnung kann der Behälter an eine Unterdruckquelle angeschlossen werden, wodurch ein Druckgefälle von aussen in das Behälterinnere entsteht, so dass das in dem Behälter geladene Inventar keine Kontaminationsgefahr des Behälteräusseren ergeben kann.

Die Erfindung betrifft auch ein Verfahren zum Beladen eines Behälters nach den Ansprüchen 12 und/oder 13 mit einer Anlage nach einem oder mehreren der Ansprüche 1 bis 11.

Der Innenraum des Behälters wird während des Beladens auf Unterdruck gehalten, wobei die austretende Luft vor dem Verlassen des Behälters über einen Filter geführt wird. Durch diese Verfahrensweise können Stäube, die beim Vereinzeln oder Schneiden der Brennstäbe entstehen, nach einem lüftungstechnischen Anschluss der Vereinzelungs- oder Schneidanlage direkt in den Behälter eingezogen werden. Die Aerosol- und Spaltstoffteilchen verbleiben fast vollständig in dem mit den Brennstäben oder Brennstababschnitten beladenen Behälter.

Durch die Erfindung wird es möglich, vereinzelte Brennstäbe von bestrahlten Kernreaktorbrennelementen ganz oder in zerkleinerter Form als Brennstababschnitte geordnet in Behälter zu füllen, die dann zwischen- oder endgelagert werden können. Durch die Erfindung wird ein dichtes Beladen des Behälters erreicht, wobei die Beladeöffnung sehr klein ausgebildet werden kann. Eine Kontamination der äusseren Mantelfläche des Behälters wird dadurch schon verringert. Die weiteren Ausbildungen der Erfindung führen zu einem fast vollständigen Vermeiden der Kontamination des Behältermantels und zu einem sauberen Durchführen der Arbeitsvorgänge, wie Vereinzeln, Zerschneiden, Zuführen und Befüllen, da mit den weiteren Ausgestaltungen der Erfindung auf äusserst vorteilhafte Weise die entstehenden Aerosole und Spaltstofffragmente in den zu beladenden Behälter selbst eingebracht werden.

Durch die beschriebene Erfindung ist das technische Problem der Befüllung eines Behälters mit Brennstäben oder mit Brennstababschnitten gelöst.

Anhand der Zeichnung wird ein Ausführungsbeispiel der Erfindung nachstehend näher erläutert. Der besseren Übersicht halber wurde auf die Darstellung von nicht zum Verständnis der Erfindung erforderliche Vorrichtungen verzichtet. Es zeigt

Fig. 1 ein schematisches Gesamtbild einer Anlage zum Beladen mit Brennstababschnitten mit einem sich im Beladevorgang befindlichen Behälter,

Fig. 2 eine schematische Querschnittsdarstellung des zu beladenden Behälters,

Fig. 3 den Behälter aus Fig. 2 mit gedrehter Beladerinne,

Fig. 4 bis 9 die Ausbildung der Beladeöffnung des Behälters sowie die Zuführöffnung in der Lüftungstrennwand, dargestellt in den verschiedenen Stufen der Beladung,

Fig. 10 die Ausbildung des im Behälter angeordneten Filters und seine lufttechnische Anschlussmöglichkeit,

Fig. 11 die Kupplungsstelle des Filters mit dem Anschluss in der Lüftungstrennwand im angedockten Zustand des Behälters.

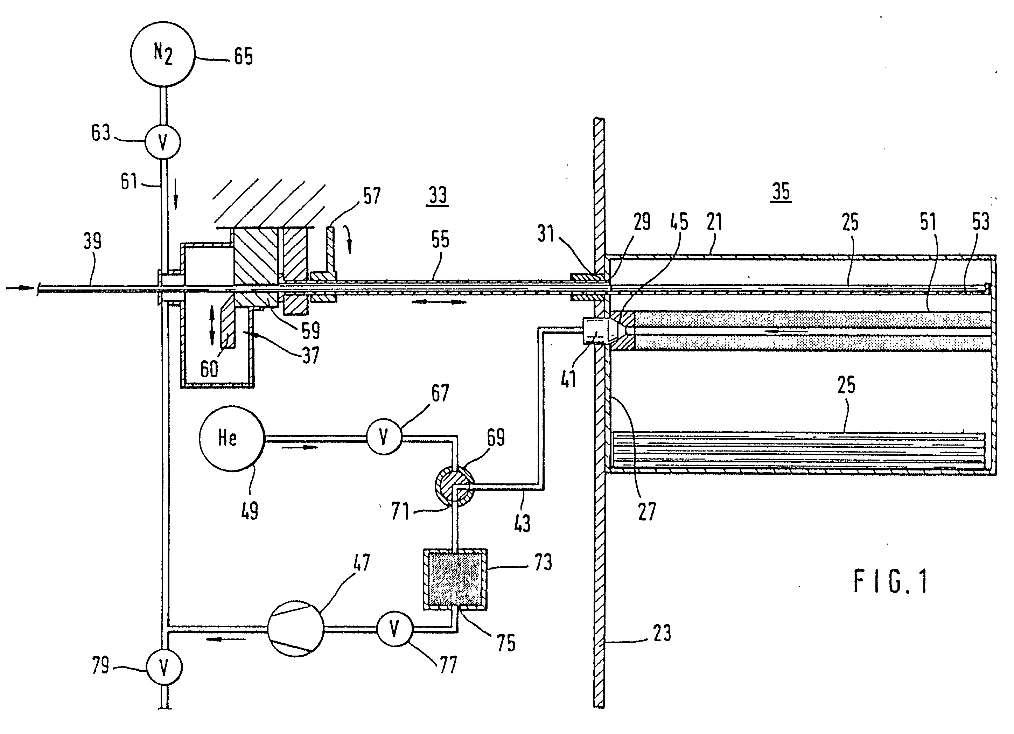

Ein Behälter 21 (Fig. 1) ist an eine Lüftungstrennwand 23 horizontal angedockt. Der Behälter 21 ist hier eine sogenannte Kokillenbüchse, die nach dem Beladen mit Brennstababschnitten 25 zugeschweisst und in einen Endlagerbehälter verbracht wird. Diese Kokillenbüchse 21 weist in der der Lüftungstrennwand 23 zugewandten Stirnwand 27 eine im oberen Bereich des Innenumfanges angeordnete Beladeöffnung 29 auf. Diese Beladeöffnung 29 fluchtet mit einer Durchgangsöffnung 31 in der Lüftungstrennwand 23.

Die Lüftungstrennwand 23 unterteilt den Arbeitsbereich in zwei separate, voneinander lüftungstechnisch getrennte Räume 33 und 35. Der Raum 35 dient dem Hantieren und Beladen des Behälters 21. Der Raum 33 ist mit einer offenen radioaktiven Belastung beaufschlagt, da in ihm die Brennstäbe zugeführt werden und eine Brennstabschere 37 zum Zerschneiden von Brennstäben 39 angeordnet ist.

Die Kokillenbüchse 21 ist über eine zweite Kupplungsstelle 41 mit einer durch die Lüftungstrennwand 23 tretenden Rohrleitung 43 versehen. In dieser zweiten Kupplungsstelle 41 ist eine Luftaustrittsöffnung 45 der Kokillenbüchse 21 über ein geeignetes Ventil (nachstehend näher beschrieben) mit einer Unterdruckquelle 47 oder einer Heliumgasdruckquelle 49 verbindbar. Die Luftaustrittsöffnung 45 ist einem Schwebstofffilter 51 vorgeschaltet, das innerhalb der Kokillenbüchse 21 angeordnet ist und parallel zu der Kokillenbüchse 21 verläuft. Die Luftaustrittsöffnung 45 ist ebenfalls sehr nahe am äussersten Innenumfang des Behälters 21 angeordnet.

Durch die Beladeöffnung 29 der Kokillenbüchse 21 ragt eine Beladerinne 53, die ausserhalb des Behälterinnenraumes in ein geschlossenes Füllrohr 55 übergeht. An dem Füllrohr 55 ist ein Schwenkantrieb 57 befestigt, durch den das Füllrohr 55 um 180° um die eigene Achse drehbar ist. Das Füllrohr 55 erstreckt sich bis in einen ortsfesten Gegenhalter 59 der Brennstabschere 37. In diese Brennstabschere 37 werden die Brennstäbe 39 schrittweise vorgeschoben und in einzelne Abschnitte 25 durch vertikales Verfahren eines beweglichen Schneidmessers 60 abgelängt.

Die Brennstabschere 37 steht über eine Rohrleitung 61 und ein Absperrventil 63 mit einer Inertgasquelle 65 in Verbindung und wird von dieser beaufschlagt. Über die Schere 37 und das Füllrohr 55 steht die Inertgasquelle 65 auch mit dem Inneren der Kokillenbüchse 21 in lüftungstechnischer Verbindung.

Die Heliumdruckquelle 49 ist über ein Absperrventil 67 und ein Drehschieberventil 69 mit dem Innenraum der Kokillenbüchse 21 verbindbar. Das Drehschieberventil 69 weist an einem anderen Ausgang 71 eine Verbindung zu einem Feinfilter 73 auf, dessen Ausgang 75 über ein Absperrventil 77 mit dem Verdichter 47 zur Erzeugung eines Unterdruckes verbunden ist. Der Ausgang des Verdichters 47 ist über die Rohrleitung 61 und ein Absperrventil 79 mit dem Zellenabluftsystem verbindbar.

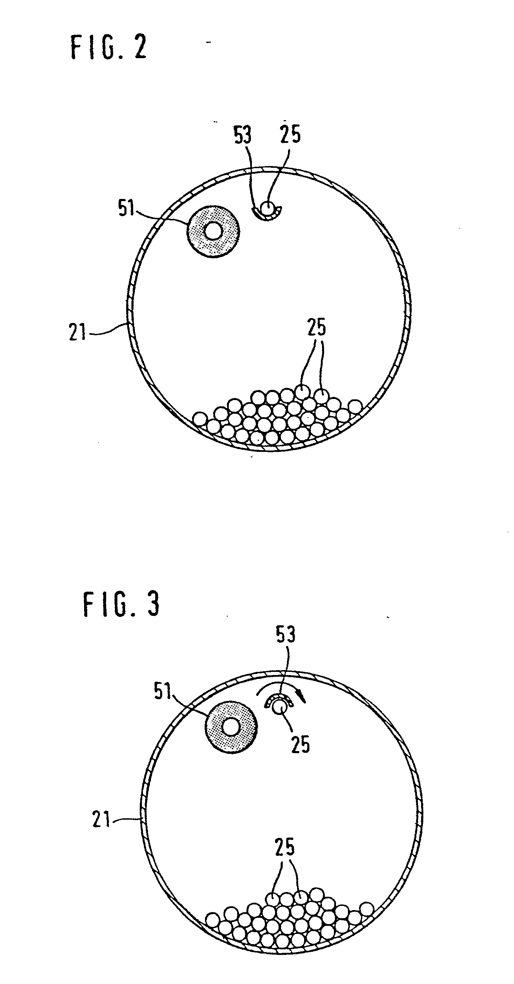

Aus den Fig. 2 und 3 wird ersichtlich, dass die Anschlüsse zum Beladen und zum Entlüften der Kokillenbüchse 21 möglichst nahe an den Innenumfang der Büchse 21 gelegt sind. In der Fig. 2 wird die Beladerinne 53 während des Einschiebens eines Brennstababschnittes 25 gezeigt. Nach dem Einschieben des Brennstababschnittes 25 wird die Beladerinne 53 gedreht (Fig. 3) und der Brennstababschnitt 25 fällt nach unten auf das Behältermantelinnere bzw. auf den vorhandenen Stapel der bereits geordnet eingeladenen Brennstababschnitte 25.

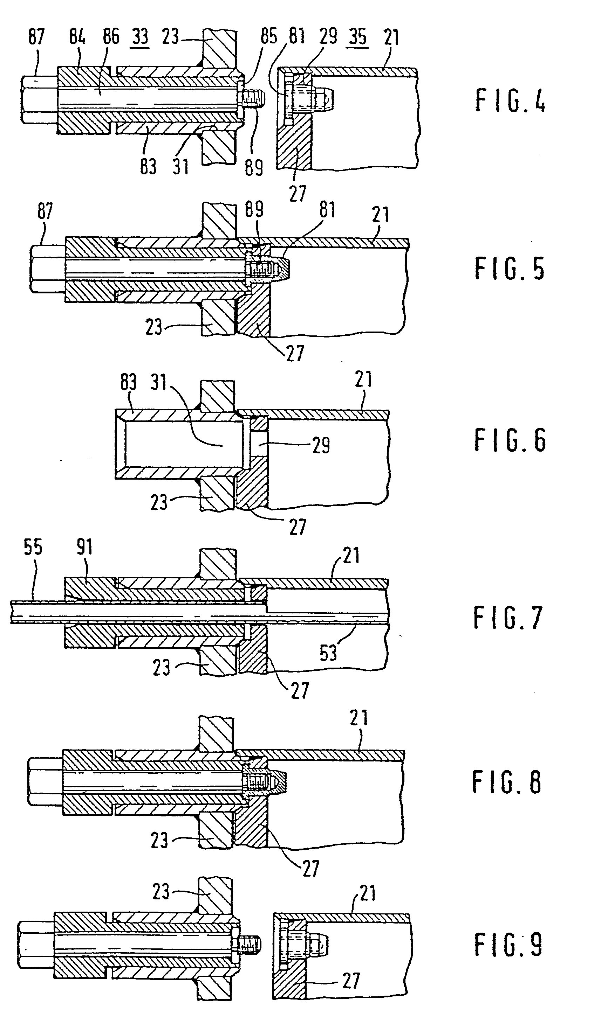

Die Beladeöffnung 29 der Kokillenbüchse 21 ist in einer ihrer beiden Stirnwände 27 eingebracht und im nicht angeschlossenen Zustand der Kokillenbüchse 21 von einem Dichtstopfen 81 verschlossen (Fig. 4). In der Lüftungstrennwand 23 ist in der Öffnung 31 ein Führungsstutzen 83 eingeschweisst. In diesen Führungsstutzen 83 ist ein Aufnahmestück 84 passend eingeschoben, das an seinem in den Handhabungsraum 35 ragenden Ende mit einer kreisförmigen Ausnehmung 85 versehen ist, deren Innendurchmesser dem Aussendurchmesser des Dichtstopfens 81 entspricht. Ein Steckschlüssel 86 ist drehbar innerhalb des Aufnahmestückes 84 passend angeordnet und weist an seinem äusseren Ende, das sich in dem Scherenarbeitsraum 33 befindet, einen Betätigungssechskant 87 auf. Am durch die Lüftungstrennwand 23 ragenden Ende des Steckschlüssels 86 ist ein Gewindezapfen 89 vorhanden. Das Aussengewinde des Gewindezapfens 89 entspricht einem in den Dichtstopfen 81 der Beladeöffnung 29 angebrachten Innengewinde, das im angedockten Zustand des Behälters 21 mit dem Gewindezapfen 89 fluchtet.

Wie in Fig. 5 dargestellt ist, kann der Gewindezapfen 89 durch Betätigen des Sechskants 87 in das Innengewinde des Dichtstopfens 81 eingeschraubt werden. Dieses geschieht nach dem Andocken der Kokillenbüchse 21 mit seiner die Beladeöffnung 29 tragenden Stirnwand 27 an der Lüftungstrennwand 23.

Das Aufnahmestück 84 und der Steckschlüssel 86 sind gemeinsam aus dem Führungsstutzen 83 herausziehbar. Dabei wird im eingeschraubten Zustand des Gewindezapfens 89 in dem Stopfen 81 dieser mit durch den Führungsstutzen 83 in den Scherenarbeitsraum 33 hineingezogen. Dabei verbleibt die Oberfläche des Dichtstopfens 81 in der Ausnehmung 85 und wird so vor einer Kontamination in dem Scherenarbeitsraum 33 geschützt. Die Beladeöffnung 29 wird frei (Fig. 6).

In den Führungsstutzen 83 ist eine Füllrohrführung 91 einsetzbar (Fig. 7), durch die das Füllrohr 55 in die Kokillenbüchse 21 eingeschoben wird.

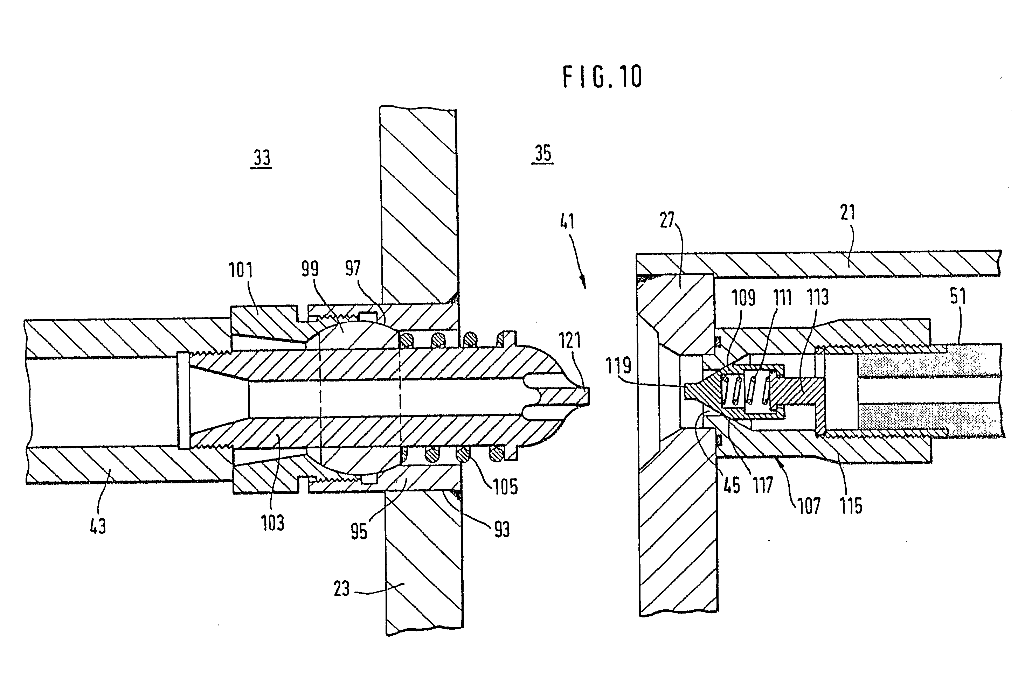

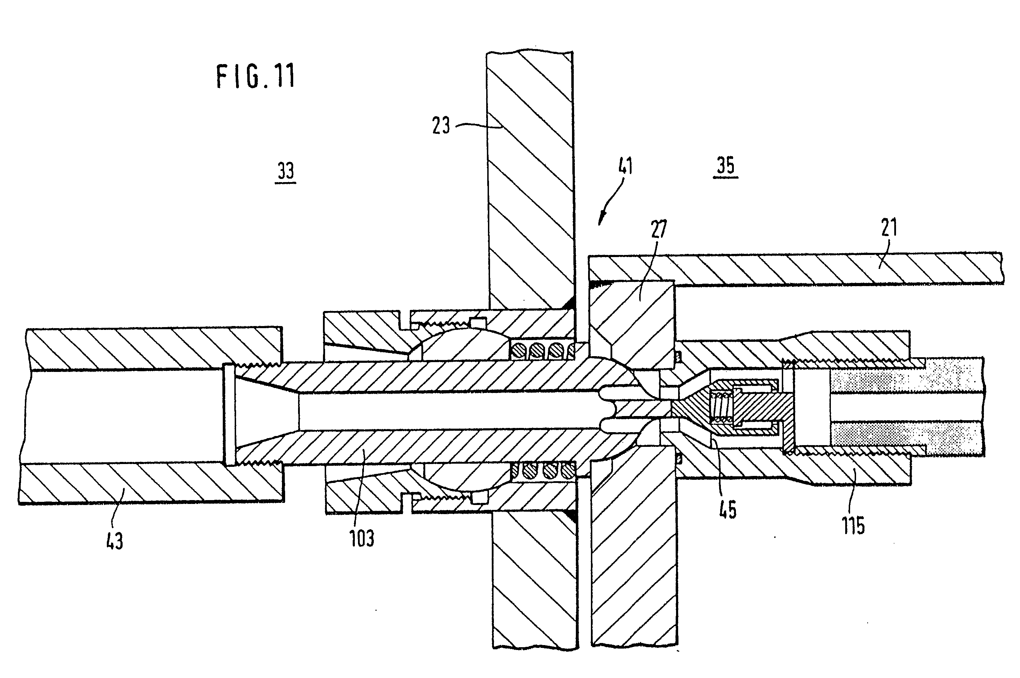

Die zweite Kupplungsstelle 41 (Fig. 10 und 11) enthält eine zweite Durchgangsöffnung 93 der Lüftungstrennwand 23, die der Luftaustrittsöffnung 45 der Kokillenbüchse 21 im angedockten Zustand fluchtend gegenüberliegt. In der Durchgangsöffnung 93 ist ein Aufnahmestutzen 95 eingeschweisst. Dieser Aufnahmestutzen 95 weist eine umlaufende innere Anschlagfläche 97 für ein Lagerstück 99 mit kugelförmiger Aussenfläche auf, das über eine Mutter 101 gegen diese Fläche 97 gepresst wird. Lagerstück 99 und Mutter 101 haben eine Mittelbohrung, in der ein mit einer achsparallelen Innenbohrung versehenes Kupplungsstück 103, das durch eine Druckfeder 105 in Richtung Behälter 21 beaufschlagt ist, angeordnet ist. Das Kupplungsstück 103 ist fest mit der Rohrleitung 43 verbunden, die eine hier nicht gezeigte flexible Kompensationsstelle für eine Achsialbewegung des Kupplungsstückes 103 aufweist.

In der fluchtenden Luftaustrittsöffnung 45 der Kokillenbüchse 21 ist ein Ventil 107 eingesetzt. Der Ventilkegel 109 ist durch eine Druckfeder 111 beaufschlagt, die sich an einem Endstück 113 des achsparallel im Behälter 21 angeordneten Filters 51 abstützt. Das Ventilgehäuse 115 umschliesst die Luftaustrittsöffnung 45 und bildet einen Ventilsitz 117. Der Ventilkegel 109 weist einen nach aussen ragenden Stiftansatz 119 auf, der von einem Stiftansatz 121 des Kupplungsstückes 103 in der Lüftungstrennwand 23 beaufschlagt werden kann. Im zusammengedockten Zustand der Kokillenbüchse 21 und der Lüftungstrennwand 23 ist der Ventilkegel 109 durch das Kupplungsstück 103 von seinem Ventilsitz 117 abgehoben (Fig. 11). Die federnde Belastung und schwenkbare Lagerung des Kupplungsstückes 103 hilft Fluchttoleranzen auszugleichen.

Die Wirkungsweise des vorstehend geschilderten Ausführungsbeispieles ist wie folgt:

Die zu beladende Kokillenbüchse 21 wird mit einer verschlossenen Beladeöffnung 29 angeliefert und mit ihrer Stirnwand 27, in der die Beladeöffnung 29 ist, in horizontaler Lage gegen die senkrechte Lüftungstrennwand 23 gebracht. Die Beladeöffnung 29 ist durch den Dichtstopfen 81, die Durchgangsöffnung 31 in der Lüftungstrennwand 23 ist durch das Aufnahmestück 84 und den Steckschlüssel 86 dicht verschlossen (Fig. 4).

Auch in der zweiten Kupplungsstelle 41 sind die beiden später zusammenwirkenden Öffnungen 45 und 93 in der stirnseitigen Abschlusswand 27 und in der Lüftungstrennwand 23 im Ruhezustand. Dabei sitzt der Ventilkegel 109 auf dem Ventilsitz 117 und verschliesst so die Luftaustrittsöffnung 45. Das Kupplungsstück 103 in der Lüftungstrennwand 23 ist in seiner Ruhestellung (Fig. 10), und über das Drehschieberventil 69 ist die Rohrleitung 43 abgeschlossen.

Nach dem Anlegen der Stirnwand 27 an die Lüftungstrennwand 23 und dem fluchtenden Ausrichten der Öffnungen 29 und 45 der Stirnwand 27 zu den Öffnungen 31 und 93 der Lüftungstrennwand 23 hebt sich der Ventilkegel 109 von seinem Ventilsitz 117, da das Kupplungsstück 103 unter Federbelastung mit seinem Stiftansatz 121 den Ventilkegel 109 achsial nach innen verschiebt (Fig. 11).

In der ersten Kupplungsstelle zwischen der Beladeöffnung 29 und der Durchgangsöffnung 31 wird der Steckschlüssel 85 durch Betätigen des Sechskantes 87 gedreht, so dass der Gewindezapfen 89 in das Innengewinde des Dichtstopfens 81 eingeschraubt wird (Fig. 5). Durch achsiales Herausziehen des Steckschlüssels 86 in den Scherenarbeitsraum 33 wird der Dichtstopfen 81 in die Ausnehmung 85 des Aufnahmestückes 84 hereingezogen. Durch weiteres Herausziehen des Steckschlüssels 86 wird dieser zusammen mit dem Aufnahmestück 84 und mit dem aufgenommenen Dichtstopfen 81 aus dem Führungsstück 83 herausgezogen und in den Scherenarbeitsraum 33 verbracht. Die Beladeöffnung 29 ist frei; ebenso die Durchgangsöffnung 31 (Fig. 6).

In die Durchgangsöffnung 31 wird die Füllrohrführung 91 eingeschoben. Das Füllrohr 55 mit der vorn ausgebildeten Beladerinne 53 wird durch die Mittelbohrung der Füllrohrführung 91 geschoben, bis die Beladerinne 53 vollständig im Behälterinneren liegt (Fig. 7). Die Beladerinne 53 erstreckt sich parallel zum Behältermantel über die gesamte Innenlänge des Behälters 21.

Das Behälterinnere wird über die zweite Kupplungsstelle 41 durch Drehen des Drehschieberventiles 69 mit der Unterdruckquelle 47 (Stellung gemäss Fig. 1) verbunden. Das Behälterinnere wird damit diesem Unterdruck ausgesetzt.

Über die Inertgasquelle 65 werden die Brennstabschere 37 und das Füllrohr 55 mit Inertgas beaufschlagt. Dadurch wird eine mögliche Selbstentzündung von entstehenden Schneidstäuben verhindert. Der Brennstabschere 37 werden die Brennstäbe 39 schrittweise zugeführt. Zwangsläufig werden dadurch die geschnittenen Brennstababschnitte 25 im Füllrohr 55 weitergeschoben und der Beladerinne 53 zugeführt. Befindet sich ein Brennstababschnitt 25 vollständig in der Beladerinne 53, wird der Schwenkantrieb 57 betätigt und die Beladerinne 53 um 180° gedreht. Der betreffende Brennstababschnitt 25 fällt aus der Beladerinne 53 nach unten auf die Innenfläche des Behältermantels bzw. im weiteren Beladevorgang auf den sich geordnet ergebenden Stapel der bereits eingeladenen Brennstababschnitte 25.

Der lüftungstechnische Abschluss der Brennstabschere 37 und der Zuführung der erzeugten Brennstababschnitte 25 gegen den Scherenarbeitsraum 33 führt dazu, dass das Füllrohr 55 aufgrund des Unterdruckes im Behälter 21 die entstehenden Aerosole, Stäube und andere durch das Zerschneiden entstehenden Partikel in das Behälterinnere leitet. Diese Aerosole und Feststoffpartikel verbleiben in dem Behälter 21, da sie von dem Filter 51 festgehalten werden, das der Luftaustrittsöffnung 45 vorgeschaltet ist. Nach dem vollständigen Beladen der Kokillenbüchse 21 sind somit nicht nur die Brennstababschnitte 25 in der Kokillenbüchse 21 vorhanden, sondern in äusserst vorteilhafter Weise auch die radioaktiven Aerosole und Staubpartikel. Das Filter 51 verbleibt ebenfalls im Behälter 21.

Ist der Behälter 21 mit Brennstababschnitten 25 in der vorbestimmten Menge befüllt, wird das Füllrohr 55 mit der Beladerinne 53 in Richtung Scherenarbeitsraum 33 zurückgezogen. Der Steckschlüssel 86 mit dem Aufnahmestück 84 und dem angeschraubten Dichtstopfen 81 wird in die Durchgangsöffnung 31 eingebracht (Fig. 8). Der Dichtstopfen 81 wird wieder in die Beladeöffnung 29 eingeschraubt. Die Beladeöffnung 29 ist verschlossen. Das Behälterinnere ist weiterhin mit der Unterdruckquelle 47 verbunden.

Nun wird das Drehschieberventil 69 in eine Stellung gedreht, in der die Heliumdruckquelle 49 mit der Rohrleitung 43 und damit mit dem Kokilleninneren verbunden ist. Die Unterdruckquelle 47 ist dadurch abgeschlossen. Das Innere der Kokillenbüchse 21 wird mit Helium von der Heliumgasdruckquelle 49 gespült, um einen späteren Lecktest der befüllten und veschlossenen Kokillenbüchse 21 zu ermöglichen. Zum vollständigen Spülen der Kokillenbüchse 21 mit Helium wird einige Male durch Wechseln der Stellung des Drehschieberventils 69 Unterdruck an die Kokillenbüchse 21 angelegt und dann wieder die Kokillenbüchse 21 mit Helium gespült.

Nun wird der Behälter 21 von der Lüftungstrennwand 23 weg bewegt (Fig. 9). Dies führt in der zweiten Kupplungsstelle 41 automatisch zu einem Verschliessen der Luftaustrittsöffnung 45, da der Ventilkegel 109 unter der Druckfederbelastung wieder auf den Ventilsitz 117 gepresst wird (Fig. 10). Das Drehschieberventil 69 wird in eine Abschlussstellung gedreht.

Die Beladung des Behälters 21 mit Brennstababschnitten 25 erfolgte ohne eine Kontaminationsgefahr der äusseren Oberfläche des Behälters 21. In der weiteren Behandlung des beladenen Behälters 21 erleichtert dies die Hantierung. Die Kokillenbüchse 21 wird in einen Endlagerbehälter gesetzt und kann der bergmännischen Endlagerung zugeführt werden.

## Patentansprüche

1. Anlage zum trockenen Beladen von Behältern mit Brennstäben oder Brennstababschnitten von bestrahlten Kernreaktorbrennelementen, in der die Brennstäbe oder Brennstababschnitte in horizontaler Ebene in einen horizontal angeordneten Behälter stirnseitig möglichst hoch an der inneren Ausnehmung eingeschoben werden, dadurch gekennzeichnet, dass eine in eine Beladeöffnung (29) des Behälters (21) einfahrbare Beladerinne (53) zum Einschieben der Brennstäbe oder Brennstababschnitte (25) angeordnet ist, und dass die Beladerinne (53) um ihre Längsachse drehbar ist.

2. Anlage zum Beladen von Behältern nach Anspruch 1, dadurch gekennzeichnet, dass an eine die Brennstäbe (39) zuführende Einrichtung oder eine die Brennstäbe (39) zerschneidende Brennstabschere (37) ein die Brennstäbe (39) oder die abgeschnittenen Brennstababschnitte (25) aufnehmendes Füllrohr (55) anschliesst, das in die während der Beladung in den Behälter (21) ragende Beladerinne (53) übergeht.

3. Anlage zum Beladen von Behältern nach Anspruch 1 oder 2, dadurch gekennzeichnet, dass für das Vereinzeln, Zuführen und/oder das Schneiden der Brennstäbe (39) und die Beladung des Behälters (21) getrennte Arbeitsräume (33 und 35) vorhanden sind, die durch eine mit verschliessbaren Durchgangsöffnungen (31, 93) versehene Lüftungstrennwand (23) voneinander abgetrennt sind.

4. Anlage zum Beladen von Behältern nach Anspruch 3, dadurch gekennzeichnet, dass der Behälter (21) an die Lüftungstrennwand (23) andockbar ist, derart, dass die Beladeöffnung (29) des Behälters (21) mit der Öffnung (31) in der Lüftungstrennwand (23) während des Beladevorganges fluchtet, und dass in der Beladeöffnung (29) ein Verschlussstopfen (81) herausnehmbar und durch die Öffnung (31) entfernbar angeordnet ist.

5. Anlage nach Anspruch 3 und/oder 4, dadurch gekennzeichnet, dass in der Öffnung (31) in der Lüftungstrennwand (23) ein drehbarer Gewindezapfen (89) angeordnet ist, der in ein entsprechendes Innengewinde des in der Beladeöffnung (29) des angedockten Behälters (21) eingeschraubten Verschlussstopfens (81) eindrehbar ist.

6. Anlage nach Anspruch 5, dadurch gekennzeichnet, dass der Gewindezapfen (89) an einem Steckschlüssel (86) angebracht ist, der in ein Aufnahmestück (84) drehbar eingesteckt ist, und dass das Aufnahmestück (84) an seinem in den Raum (35) ragenden Ende eine kreisförmige Ausnehmung (85) aufweist, deren Innendurchmesser dem Aussendurchmesser des Dichtstopfens (81) entspricht.

7. Anlage nach einem oder mehreren der Ansprüche 3 bis 6, dadurch gekennzeichnet, dass in die Öffnung (31) ein Führungsstück (91) einschiebbar ist, in dessen Mittelbohrung das Füllrohr (55) im Beladezustand verläuft.

8. Anlage nach einem oder mehreren der Ansprüche 1 bis 7, dadurch gekennzeichnet, dass im Behälter (21) ein achsparalleler Filter (51) angeordnet ist, der über eine Luftaustrittsöffnung (45) in der Stirnwand (27) des Behälters (21) mit einer äusseren Unterdruckquelle (47) verbindbar ist.

9. Anlage nach Anspruch 8, dadurch gekennzeichnet, dass in der Lüftungstrennwand (23) ein Kupplungsstück (103) angeordnet ist, das im angedockten Zustand des Behälters (21) mit einem in der Luftaustrittsöffnung (45) eingesetzten Ventil (109, 117) zusammenwirkt und einen Gasweg zum Filter (51) öffnet.

10. Anlage nach einem der Ansprüche 1 bis 9, dadurch gekennzeichnet, dass die Vereinzelungsvorrichtung, die Brennstabzuführvorrichtung und/oder die Brennstabschere (37) und das Füllrohr (55) mit einer Inertgasquelle (65) verbindbar und lüftungstechnisch gegen die Zellenatmosphäre abgeschlossen sind.

11. Anlage nach Anspruch 8 und/oder 9, dadurch gekennzeichnet, dass das Innere des Behälters (21) über den Luftaustrittsanschluss (45) mit einer Heliumgasquelle (49) verbindbar ist.

12. Behälter zum Beladen mit Brennstäben oder Brennstababschnitten von bestrahlten Kernreaktorbrennelementen mit einer Anlage nach einem oder mehreren der Ansprüche 1 bis 11, dadurch gekennzeichnet, dass der Behälter (21) eine möglichst nahe dem Innenumfang angeordnete Luftaustrittsöffnung (45) aufweist. Die im Behälterinneren von einem sich über die Behälterlänge erstreckenden Filter (51) umgeben ist.

13. Behälter nach Anspruch 12, dadurch gekennzeichnet, dass die Beladeöffnung (29) und die Luftaustrittsöffnung (45) dicht verschliessbar sind.

14. Verfahren zum Beladen eines Behälters nach den Ansprüchen 12 und/oder 13 mit einer Anlage nach einem oder mehreren der Ansprüche 1 bis 11, dadurch gekennzeichnet, dass der Innenraum des Behälters während des Beladens auf Unterdruck gehalten wird, wobei die austretende Luft vor dem Verlassen des Behälters über einen Filter geführt wird.

**Claims**

1. An installation for the dry loading of containers with fuel rods or fuel rod portions of irradiated nuclear reactor fuel elements, in which the fuel rods or fuel rod portions are inserted in a horizontal plane into a horizontally arranged container at the end thereof as high as possible at the internal cavity, characterised in that a loading channel (53) which can be introduced into a loading opening (29) of the container (21) is arranged for insertion of the fuel rods or fuel rod portions (25), and that the loading channel (53) is rotatable about its longitudinal axis.

2. An installation for loading containers according to claim 1, characterised in that connected to a means for feeding the fuel rods (39) or a fuel rod shears (37) for cutting up the fuel rods (39) is a filling tube (55) which receives the fuel rods (39) or the cut-off fuel rod portions (25) and which changes into the loading channel (53) which projects into the container (21) during the loading operation.

3. An installation for loading containers according to claim 1 or claim 2, characterised in that separate working areas (33 and 35) are provided for the operations of separating, feeding and/or cutting the fuel rods (39) and loading the container (21), which working areas (33 and 35) are separated from each other by a ventilation partition (23) provided with closable through openings (31, 93).

4. An installation for loading containers according to claim 3, characterised in that the container (21) can be docked to the ventilation partition (23) in such a way that the loading opening (29) of the container (21) aligns with the opening (31) in the ventilation partition (23) during the loading operation and that a closure plug (81) is arranged in the loading opening (29) in such a way that it can be withdrawn and removed through the opening (31).

5. An installation according to claim 3 and/or claim 4, characterised in that disposed in the opening (31) in the ventilation partition (23) is a rotatable screwthreaded pin (89) which can be screwed into a corresponding internal screwthread in the closure plug (81) which is screwed in the loading opening (29) of the docked container (21).

6. An installation according to claim 5, characterised in that the screwthreaded pin (89) is mounted on a socket wrench (86) which is rotatably inserted into a receiving portion (84) and that, at its end which projects into the space (35), the receiving portion (84) has a circular recess (85), the inside diameter of which corresponds to the outside diameter of the sealing plug (81).

7. An installation according to one or more of claims 3 to 6, characterised in that a guide portion (91) can be inserted into the opening (31), the filling tube (55) extending through the central bore of the guide portion (91) in the loading condition.

8. An installation according to one or more of claims 1 to 7, characterised in that disposed in the container (21) is a filter (51) which is arranged in parallel-axis relationship and which can be communicated with an external reduced pressure source (47) by way of an air outlet opening (45) in the end wall (27) of the container (21).

9. An installation according to claim 8, characterised in that arranged in the ventilation partition (23) is a coupling portion (103) which in the docked condition of the container (21) co-operates with a valve (109, 117) inserted in the air outlet opening (45), and opens a gas path to the filter (51).

10. An installation according to one of claims 1 to 9, characterised in that the separating device, the fuel rod feed device and/or the fuel rod shears (37) and the filling tube (55) can be connected to an inert gas source (65) and are closed off relative to the cell atmosphere for ventilation procedures.

11. An installation according to claim 8 and/or claim 9, characterised in that the interior of the container (21) can be connected to a helium gas source (49) by way of the air outlet connection (45).

12. A container for loading with fuel rods or fuel rod portions of irradiated nuclear reactor fuel elements with an installation according to one or more of claims 1 to 11, characterised in that the container (21) has an air outlet opening (45) which is arranged as closely as possible to the inside periphery and which in the interior of the container is surrounded by a filter (51) extending over the length of the container.

13. A container according to claim 12, characterised in that the loading opening (29) and the air outlet opening (45) can be sealingly closed.

14. A method of loading a container according to claims 12 and/or 13 with an installation according to one or more of claims 1 to 11, characterised in that the interior of the container is kept at a reduced pressure during the loading operation, the issuing air being passed by way of a filter prior to leaving the container.

**Revendications**

1. Installation pour charger à sec des crayons combustibles ou des tronçons de crayons combustibles d'assemblages combustibles usés de réacteurs nucléaires dans des récipients, dans laquelle les crayons combustibles ou les tronçons de crayons combustibles disposés dans un plan horizontal dans un récipient sont introduits en glissant le plus haut possible à l'intérieur, par le côté frontal, caractérisée en ce qu'il est prévu une goulotte de chargement (53) qui peut pénétrer dans une ouverture de cahrgement (29) du récipient (21) pour introduire des crayons combustibles ou des tronçons de crayons combustibles (25), et la goulotte de chargement (3) est montée tournante autour de son axe longitudinal.

2. Installation pour charger des récipients suivant la revendication 1, caractérisée en ce que, à un dispositif d'amenée des crayons combustibles ou à une cisaille (37) cisaillant les crayons combustibles (39) se raccorde un tube de chargement (55) qui reçoit les crayons combustibles (39) ou les tronçons de crayons combustibles (25) cisaillés et qui se transforme pendant le chargement en la goulotte de chargement (53) faisant saillie dans le récipient (21).

3. Installation pour charger des récipients suivant la revendication 1 ou 2, caractérisée en ce que, pour individualiser, pour amener et/ou pour couper les crayons combustibles (39) et pour le chargement du récipient (21), il est prévu des chambres de travail (33 et 35) distinctes qui sont séparées l'une de l'autre par une cloison de séparation pour la ventilation (23) munie d'ouvertures de passage (31, 93) qui peuvent être fermées.

4. Installation pour charger des récipients suivant la revendication 3, caractérisée en ce que le récipient (21) peut être appliqué à la cloison de séparation pour la ventilation (23) de façon que l'ouverture de chargement (29) du récipient (21) soit alignée avec l'ouverture (31) de la cloison de séparation pour la ventilation (23) pendant le processus de chargement, et en ce qu'il est prévu, dans l'ouverture de chargement (29), un tampon de fermeture (81) qui peut être retiré et qui peut être enlevé par l'ouverture (31).

5. Installation suivant la revendication 3 et /ou 4, caractérisée en ce que dans l'ouverture (31) de la cloison de séparation pour la ventilation (23) est monté un tourillon fileté (89) tournant qui se visse dans un taraudage correspondant du tampon de fermeture (81) vissé dans l'ouverture de chargement (29) du récipient (21) qui est appliqué.

6. Installation suivant la revendication 5, caractérisée en ce que le tourillon fileté (89) est monté sur une clé à tige (86) qui peut être enfilée tout en pouvant tourner dans une pièce de réception (84), et la pièce de réception (84), et la pièce de réception (84) comporte, à son extrémité faisant saillie dans la chambre (35), un évidement (85) circulaire dont le diamètre intérieur correspond au diamètre extérieur du tampon d'étanchéité (81).

7. Installation suivant l'une ou plusieurs des revendications 3 à 6, caractérisée en ce que, dans l'ouverture (31), peut être introduite une pièce de guidage (91) dans l'alésage central de laquelle s'étend le tube de chargement (55) à l'état chargé.

8. Installation suivant l'une ou plusieurs des revendications 1 à 7, caractérisée en ce que, dans le récipient (21), est monté un filtre (51) qui est parallèle à l'axe et qui communique par un orifice de sortie d'air (45) ménagé dans la paroi frontale (27) du récipient (21) avec une source extérieure de dépression (47).

9. Installation suivant la revendication 8, caractérisée en ce que, dans la cloison de séparation de ventilation (23), est montée une pièce d'accouplement (103) qui coopère, lorsque le récipient (21) est à l'état appliqué, avec une soupape (109, 117) montée dans l'orifice de sortie de l'air (45) et qui ouvre un trajet pour le gaz menant au filtre (51).

10. Installation suivant l'une des revendications 1 à 9, caractérisée en ce que le dispositif d'individualisation, le dispositif d'amenée des crayons combustibles et/ou la cisaille de crayons combustibles (37) et le tube de chargement (55) peuvent communiquer avec une source de gaz inerte (65) et sont fermés vis-à-vis de l'atmosphère des cellules, du point de vue de la technique de ventilation.

11. Installation suivant la revendication 8 et/ou 9, caractérisée en ce que l'intérieur du récipient (21) peut communiquer par le raccordement de sortie d'air (45) avec une source d'hélium gazeux (49).

12. Récipient pour charger des crayons combustibles ou des tronçons de crayons combustibles d'assemblages combustibles de réacteur nucléaire usés, dans une installation suivant l'une ou plusieurs des revendications 1 à 11, caractérisée en ce que le récipient (21) comporte un orifice de sortie d'air (45) disposé le plus près possible du pourtour intérieur et entouré, à l'intérieur du récipient, d'un filtre (51) s'étendant sur la longueur du récipient.

13. Récipient suivant la revendication 12, caractérisée en ce que l'ouverture de chargement (29) et l'orifice de sortie d'air (45) peuvent être fermés d'une manière étanche.

14. Procédé de chargement d'un récipient suivant les revendications 12 et/ou 13 avec une installation suivant l'une ou plusieurs des revendications 1 à 11, caractérisée en ce qu'il consiste à maintenir l'intérieur du récipient en dépression, pendant le chargement, l'air sortant étant envoyé sur un filtre avant de quitter le récipient.

FIG.1

## FIG. 2

## FIG. 3

FIG.4

FIG.5

FIG.6

FIG.7

FIG.8

FIG.9

FIG.10

FIG.11

EP 0 171 774 B1